# EUROPEAN PATENT APPLICATION

(11) **EP 3 706 023 A1**
(43) Date of publication of application: **09.09.2020**
(21) Application number: 19160425.5
(22) Date of filing: 02.03.2019
(51) Int. Cl.: G06F 21/53, G06F 21/56, H04L 29/06, G06N 20/00

(54) **RUNTIME VALIDATION OF INTERNET OF THINGS DEVICES**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

A computer implemented method of validating operation of a network connected computing device, the device having a plurality of sensors and being provided with a software application for execution thereon, the method comprising: generating a model of operation of the device executing the application at runtime in an authorised mode of operation, the model encoding sensor information from the sensors of the device during the execution in the authorised mode so as to classify a subsequent operation of the device as one of: consistent; and inconsistent with the model; and restricting the subsequent operation of the device to execute the application in response to the classification.

## Description

The present invention relates to runtime validation of network connected devices.

Network connected computing devices can execute software applications and communicate with other devices. Some such devices include context-aware devices that include network connectivity, an ability to execute applications software, and sensor facilities and/or resources such as location, position, sound, video, light or other sensors. Examples of such devices are context-aware internet of things (IoT) devices.

The execution of software applications on such devices can present a security threat if the device is operated in a malicious manner. Such operation can arise, for example, due to the installation, impact or effect of malicious software (malware) or malicious modification of software. Detecting such software and mitigating negative effects of its execution presents a challenge.

According to a first aspect of the present invention, there is a provided a computer implemented method of validating operation of a network connected computing device, the device having a plurality of sensors and being provided with a software application for execution thereon, the method comprising: generating a model of operation of the device executing the application at runtime in an authorised mode of operation, the model encoding sensor information from the sensors of the device during the execution in the authorised mode so as to classify a subsequent operation of the device as one of: consistent; and inconsistent with the model; and restricting the subsequent operation of the device to execute the application in response to the classification.

Preferably, the network connected computing device is an Internet-of-Things device and the sensors include one or more of: a location sensor; a position sensor; a voice control sensor; one or more gesture recognition sensors; an object recognition sensor; an audio sensor; and a visual sensor.

Preferably, the sensor information is obtained via one or more application programming interfaces of the device.

Preferably, the model is a machine learning model.

Preferably, the machine learning model is a long short-term memory model.

Preferably, the model is a Gaussian mixture model.

Preferably, restricting the subsequent operation of the device includes preventing execution of the application by the device.

Preferably, restricting the subsequent operation of the device includes causing the execution of the application by the device in a virtual container of the device so as to isolate the execution of the application from direct access to resources of the device.

Preferably, restricting the subsequent operation of the device is further responsive to a geo-location of the device.

According to a second aspect of the present invention, there is a provided a computer system including a processor and memory storing computer program code for performing the steps of the method set out above.

According to a third aspect of the present invention, there is a provided a computer system including a processor and memory storing computer program code for performing the steps of the method set out above.
a computer program element comprising computer program code to, when loaded into a computer system and executed thereon, cause the computer to perform the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is a component diagram of a network connected internet of things device including a validator component in accordance with embodiments of the present invention; and
Figure 3 is a flowchart of a method of validating operation of a network connected computing device in accordance with embodiments of the present invention.

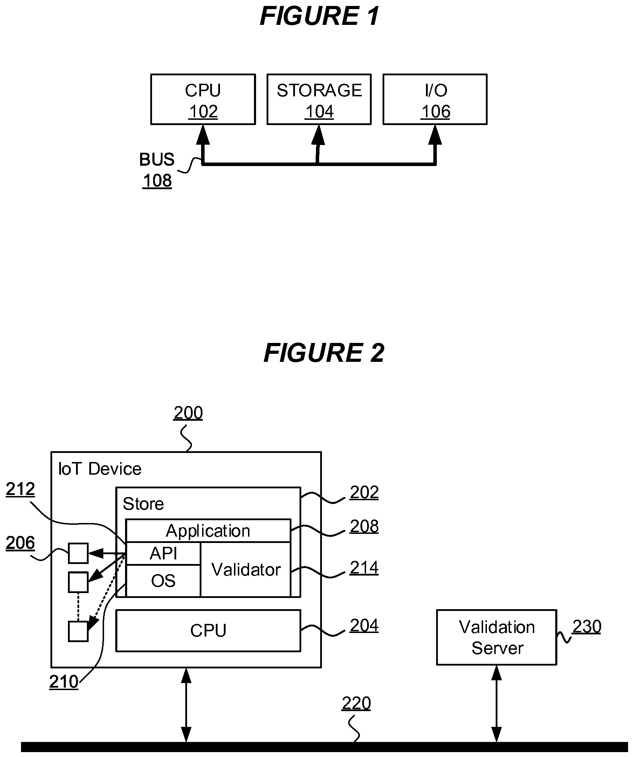

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of a network connected internet of things (IoT) device 200 including a validator component 214 in accordance with embodiments of the present invention. The IoT device 200 is a context-aware network connected computing device including sensors 206. In one embodiment the IoT device 200 is a network connected wearable device such as an augmented reality "smart glasses" device including a computer system. The sensors 206 include devices, appliances and/or components operable to sense, detect, record and/or respond to states and/or occurrences in relation to the device 200. For example, one or more sensors can include: location sensors such as a global positioning system, latitude, longitude or relative location sensor; position sensors such as an inertial measurement unit (IMU), force, angular rate or magnetic field sensor; audio sensors such as a microphone including sensors with associated hardware, software, firmware and/or logic for sound, noise, speech and/or voice recognition; one or more sensors adapted to recognise gestures, actions, movements, behaviours or the like of a user or subject; visual sensors including sensors with associated hardware, software, firmware and/or logic for object, image, light, space or visible movement recognition; sensors capable of object and/or pattern recognition including one and two-dimensional codes, spatial scanning, object scanning, face recognition and the like; and other sensors as will be apparent to those skilled in the art. Notably, while Figure 2 depicts an IoT device 200 that is context-aware by way of sensors 206, it will be appreciated by those skilled in the art that alternative network-connected computing devices provided with sensors 206 could be employed.

The device 200 is provided with a data store 202 and a central processing unit (CPU) 204. The data store 202 can include a memory suitable for storing software code for execution by the device using the CPU 204. Notably, the device 200 can be a multi-part device such as an augmented reality system including a computer system having at least part of each of the store 202 and CPU 204, and one or more additional components such as smart-glasses, a headset, wearable device(s) and the like including, for example, one or more of the sensors 206.

The data store 202 stores an operating system 210 for providing operating system services for the device 200 and application programming interfaces (APIs) 212. The APIs 212 include software interfaces for communicating with, receiving information from, configuring and/or operating the sensors 206. The APIs 212 can be provided as part of, or in conjunction with, the operating system 210. Alternatively, at least some of the APIs 212 can be provided as software component separate from the operating system 210. The operating system 210 and APIs 212 provide for the execution of an application 208 by the device 200 as a software component employing at lest some of the sensors 206. For example, the application 208 can be a software application for taking and processing sensor data and providing some output such as a display for a user or the storage of information. The application 208 can be susceptible to malicious attack such as by way of modification of the application 208, supplementing the application 208 by additional software code or components, or manipulation or change of the nature, arrangement, configuration or use of the application 208.

Embodiments of the present invention provide a validator component 214 as a hardware, software, firmware or combination component operable with the device 200 to provide validation of the operation of the application 208 at a runtime of the application 208. In the exemplary embodiment of Figure 2, the validator 214 is a software component stored in the data store 202 and operable with the operating system 210 and the APIs 212 such that the validator 214 is operable to monitor, record, intercept or observe calls, executions and/or invocations of one or more of the APIs 212 such that one or more of inputs, outputs and configurations of the sensors 206 can be determined by the validator 214.

The validator 214 is operable with a validation server 230 as a hardware, software, firmware or combination component arranged to generate a model of operation of the application 208 executed by the device 200. In the exemplary embodiment of Figure 2, the validation server 230 is a network connected computer system communicatively connected to the validator 214 of the device 200 via a communications network 220 such as a wired or wireless communications network.

The validator 214 thus receives information from the validator 214 about sensors 206 in the device, such information being obtainable by the validator 214 via the APIs 212. The information can include, for example, sensor output, sensor state, sensor configuration, sensor configuration changes, sensor actions and other information as will be apparent to those skilled in the art. The sensor information is used by the validation server 230 to generate a model of operation of the device 200 suitable for classifying a subsequent operation of the device as consistent or inconsistent with such model.

In one embodiment, the model of operation is a machine learning model such as a trained supervised machine learning algorithm. For example, the model can be generated as a long short-term memory (LSTM) model trained to predict a next operation from a series of operations indicated in information about the sensors 206 received from the validator 214. Applying such a model to a sequence of operations of the sensors 206 provides for a classification of the operation of the device (by way of the operations of the sensors 206) as consistent with, or inconsistent with, the operations reflected by the model.

In an alternative or additional embodiment, the model of operation is a Gaussian mixture model in which a set of data points is used to fit a Gaussian mixture model as parameters that determine a proportion of each Gaussian as well as their mean and variance based on vectors of features for time windows of sensor information received from the validator 214. Such a Gaussian mixture model can be used to perform a probabilistic analysis to determine a likelihood of subsequent data points in the model in order to classify a sequence of data points derived from the operation of the device 200 as consistent with, or inconsistent with, the operations reflected by the model. The use of a Gaussian mixture model in this way is considered in the paper "Practice on Classification using Gaussian Mixture Model" (Mengfei Cao, Tufts University, Medford, 2010, available from http://www.eecs.tufts.edu/∼mcao01/ 2010f/COMP-135.pdf).

In use, by way of example, the validation server 230 is operable in two modes of operation. In a first mode of operation the device 200 operates in an authorised mode of operation such that the application executes with the device 200 within acceptable parameters. Thus, the inputs, outputs, configurations and the like of the sensors 206 are consistent with the authorised mode of operation. In the first mode of operation the validation server 230 generates the model of operation of the device 200 executing in the authorised mode of operation. Subsequently, the device 200 operates in a subsequent mode of operation that is not necessarily an authorised mode of operation. Thus, the device 200 could, conceivably, be subject to malicious interference during such subsequent mode of operation. The second mode of operation of the validation server 230 is used during such subsequent mode of operation of the device 200 to receive, via the validator 214, sensor information so as to classify the operation of the device 200 in the subsequent mode of operation as either consistent or inconsistent with the model of operation of the device 200. Thus, a classification of operation of the device 200 as inconsistent with the model of operation of the device 200 serves to identify operation of the device that may be subject to malicious interference.

Thus, in use, the validation server 230 operable on the basis of information received from the validator 214 identifies operation of the device 200 inconsistent with the model of operation. On identification of such inconsistency, the operation of the device 200 can be restricted such as by precluding further operation of the device 200 or the application 208 executing therewith, or by containing and/or isolating operation of the application 208, such as by transitioning the application 208 to execute within a virtualised software container in which, inter alia, execution of the application 208 is isolated from direct access to resources of the device 200. Thus, in this way, anomalous operation of the device 200 can be detected and mitigated.

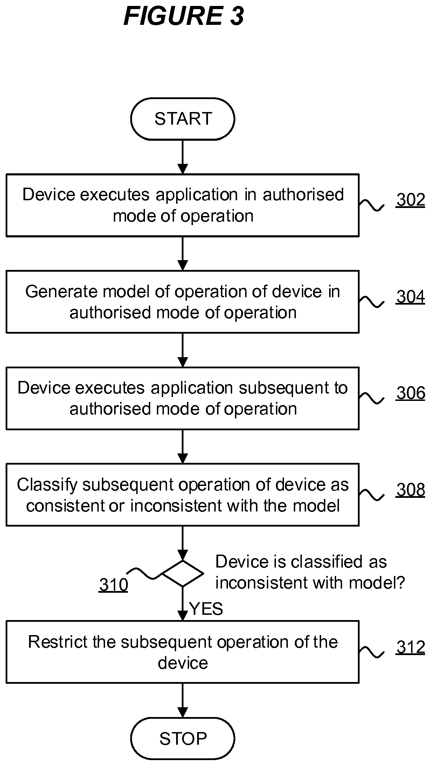

Figure 3 is a flowchart of a method of validating operation of a network connected computing device in accordance with embodiments of the present invention. Initially, at step 302, the device 200 executes the application 208 in an authorised mode of operation. At step 304 the validation server 230 receives sensor information via the validator 214 to generate a model of operation of the device 200 operating in the authorised mode of operation. At step 306 the device 200 executes the application 208 in a subsequent mode of operation. At step 308 the validation server 230 receives sensor information via the validator 214 to classify the subsequent operation of the device 200 as consistent or inconsistent with the model. If, at step 310, the method classifies the subsequent operation of the device 200 as inconsistent with the model, the operation of the device is restricted at step 312.

In one embodiment, restriction of subsequent operation of the device at step 312 is further responsive to a geo-location of the device 200, such as a location of the device determined via a location sensor 206 or the like.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of validating operation of a network connected computing device, the device having a plurality of sensors and being provided with a software application for execution thereon, the method comprising:
generating a model of operation of the device executing the application at runtime in an authorised mode of operation, the model encoding sensor information from the sensors of the device during the execution in the authorised mode so as to classify a subsequent operation of the device as one of: consistent; and inconsistent with the model; and
restricting the subsequent operation of the device to execute the application in response to the classification.

2. The method of claim 1 wherein the network connected computing device is an Internet-of-Things device and the sensors include one or more of: a location sensor; a position sensor; a voice control sensor; one or more gesture recognition sensors; an object recognition sensor; an audio sensor; and a visual sensor.

3. The method of any preceding claim wherein the sensor information is obtained via one or more application programming interfaces of the device.

4. The method of any preceding claim wherein the model is a machine learning model.

5. The method of claim 4 wherein the machine learning model is a long short-term memory model.

6. The method of any of claims 1 to 3 wherein the model is a Gaussian mixture model.

7. The method of any preceding claim wherein restricting the subsequent operation of the device includes preventing execution of the application by the device.

8. The method of any of claims 1 to 6 wherein restricting the subsequent operation of the device includes causing the execution of the application by the device in a virtual container of the device so as to isolate the execution of the application from direct access to resources of the device.

9. The method of any preceding claim wherein restricting the subsequent operation of the device is further responsive to a geo-location of the device.

10. A computer system including a processor and memory storing computer program code for performing the steps of the method of any preceding claim.

11. A computer program element comprising computer program code to, when loaded into a computer system and executed thereon, cause the computer to perform the steps of a method as claimed in any of claims 1 to 9.
